# EUROPÄISCHE PATENTSCHRIFT

(11) **EP 2 966 333 B1**
(45) Veröffentlichungstag und Bekanntmachung des Hinweises auf die Patenterteilung: **03.10.2018**
(21) Anmeldenummer: 15001848.9
(22) Anmeldetag: 23.06.2015
(51) Int. Cl.: F16L 47/02, B29B 13/02, F16L 47/06, B29C 65/00, B29C 65/02

(54) **ANORDNUNG MIT ZUMINDEST EINEM VERBUNDROHR**
ASSEMBLY WITH AT LEAST ONE COMPOSITE PIPE
SYSTEME DOTE D'AU MOINS UN TUYAU COMPOSITE

(30) Priorität: 08.07.2014 AT 5482014
(43) Veröffentlichungstag der Anmeldung: 13.01.2016
(73) Patentinhaber: Jansen AG, 9463 Oberriet (CH)
(72) Erfinder: Brülisauer, Urs, 9463 Oberriet (CH); Peter, Manuel, 8632 Tann (CH); Walker, Silvan, 8854 Galgenen (CH); Schwendemann, Daniel, 88630 Pfullendorf (DE)
(74) Vertreter: Fechner, Thomas

(56) Entgegenhaltungen:
- EP-A1- 0 485 651
- EP-A2- 2 738 480
- WO-A1-2009/148318
- CN-Y- 201 170 384
- DE-C1- 3 527 440
- US-A- 4 670 207

## Beschreibung

Die vorliegende Erfindung betrifft eine Anordnung mit zumindest einem Verbundrohr und zumindest einem mit dem Verbundrohr in einem Verbindungsbereich verbundenen Kopplungsstück, wobei das Verbundrohr eine mehrschichtig aufgebaute Rohrwandung mit zumindest einem äußeren Kunststoffmantel und zumindest einem inneren Kunststoffmantel und zumindest einer zwischen dem äußeren Kunststoffmantel und dem inneren Kunststoffmantel angeordneten Armierung aufweist und der äußere Kunststoffmantel und der innere Kunststoffmantel im Verbindungsbereich jeweils stoffschlüssig mit dem Kopplungsstück verbunden, insbesondere verschmolzen, sind, wobei sich der äußere Kunststoffmantel und der innere Kunststoffmantel in einer axialen Längsrichtung des Verbundrohres verschieden weit in das Kopplungsstück hinein erstrecken.

Um die Druckfestigkeit von Kunststoffrohren bzw. -rohrleitungen zu erhöhen, ist es bekannt, Verbundrohre mit einer mehrschichtig aufgebauten Rohrwandung zu verwenden, wobei zwischen zumindest einem äußeren Kunststoffmantel und zumindest einem inneren Kunststoffmantel eine Armierung zur Erhöhung der Festigkeit des Verbundrohres angeordnet ist. Es ist auch bekannt, diese Verbundrohre mit einem Kopplungsstück stoffschlüssig zu verbinden, insbesondere zu Verschmelzen. Häufig wird auch von einem Verschweißen gesprochen. Bezüglich des gattungsgemäßen Standes der Technik wird auf die WO 2009/148318 A1 verwiesen. Diese Schrift zeigt in den Fig. 5 bis 7 Varianten, bei denen die vorderen Enden des Verbundrohres schräg abgeschnitten sind, sodass sich der äußere Kunststoffmantel und der innere Kunststoffmantel in einer axialen Längsrichtung des Verbundrohres verschieden weit in das Kopplungsstück hinein erstrecken.

Die DE 35 27 440 C1 und die EP 0 485 651 A1 zeigen jeweils gattungsfremde Verbindungen eines Verbundrohrs mit einem Kopplungsstück, bei denen sich jeweils nur der innere Kunststoffmantel des Verbundrohr in das Kopplungsstück hinein erstreckt. Die CN 201 170 384 Y offenbart Rohre mit einem Stahlgerüst mit einem inneren und einem äußeren Kunststoffmantel. Auf einen Bereich des äußeren Kunststoffmantels mit einer Abfolge von Vorsprüngen wird eine Muffe mittels Spritzguss aufgebracht. Die Verbindung der Rohre erfolgt über eine stirnseitige Verbindung der Muffen.

Aufgabe der Erfindung ist es, bei einer gattungsgemäßen Anordnung eine Möglichkeit zu schaffen, wie die Verbindung zwischen Verbundrohr und Kopplungsstück möglichst druckfest ausgebildet sein kann.

Hierzu schlägt die Erfindung vor, dass der äußere Kunststoffmantel und der innere Kunststoffmantel im Verbindungsbereich, in einem Längsschnitt entlang der axialen Längsrichtung des Verbundrohres gesehen, gemeinsam eine treppenförmige Struktur der Rohrwandung ausbilden.

Durch die treppenförmige oder mit anderen Worten abgestufte Struktur der Rohrwandung des Verbundrohres im Verbindungsbereich können zum einen verschieden ausgerichtete und zum anderen relativ große Flächen zur Verfügung gestellt, an denen das Verbundrohr mit dem Kopplungsstück stoffschlüssig verbunden, insbesondere verschmolzen, werden kann. Hierdurch werden hochdruckfeste Verbindungen geschaffen, die z.B. in geothermischen Sonden, Wasser- oder Gas- oder Heizungsleitungen, zur Befestigung von Fittings und dergleichen eingesetzt werden können. In einer geothermischen Sonde kann so z.B. auch ein Sondenfuß an einem Verbundrohr der geothermischen Sonde befestigt werden. Bei dem Kopplungsstück kann es sich um ein Kunststoffrohr oder ebenfalls um ein Verbundrohr, um einen Fitting, um eine Muffe aber auch um sonstige Bauteile, welche mit einem Verbundrohr verbunden werden sollen, handeln. Das Kopplungsstück kann mit und ohne Armierung ausgeführt sein. Es weist günstigerweise jedenfalls einen Kunststoffkörper auf, mit dem die Kunststoffmäntel des Verbundrohres stoffschlüssig verbunden, vorzugsweise verschmolzen, werden können. Anstelle eines Verschmelzens kann auch ein Verkleben als stoffschlüssige Verbindung vorgesehen sein. Auch andere beim Stand der Technik bekannte, geeignete stoffschlüssige Verbindungsarten sind denkbar. Eine erfindungsgemäße Anordnung erreicht günstigerweise Druckfestigkeiten von zumindest 16 bar, vorzugsweise von zumindest 25 bar und darüber.

Günstigerweise ist vorgesehen, dass der äußere Kunststoffmantel und/oder der innere Kunststoffmantel, vorzugsweise jeweils, eine in sich umfangsgeschlossene Kunststoffschicht bilden. Die Armierung besteht bevorzugt aus einem anderen Material oder zumindest einer anderen Materialzusammensetzung als der äußeren Kunststoffmantel und der innere Kunststoffmantel. Es kann sich z.B. um Faserverstärkung wie insbesondere Gewebe aus Metall und/oder Kunststoff und/oder Karbonfasern und/oder Glasfasern und dergleichen handeln. Genauso gut sind aber auch Wicklungen aus Fasern und/oder Bändern, welche gegebenenfalls miteinander verschweißt werden können, aus oder mit den genannten Materialien und dergleichen denkbar. Grundsätzlich kann auf alle beim Stand der Technik an sich bekannten, hier einsetzbaren Arten der Armierungen zurückgegriffen werden. Die Armierung ist günstigerweise ebenfalls in sich umfangsgeschlossen ausgebildet.

Ein Verbundrohr einer erfindungsgemäßen Anordnung weist somit zumindest drei Schichten, nämlich einen innere Kunststoffmantel, eine Armierung und einen äußeren Kunststoffmantel auf. Natürlich ist auch ein Aufbau eines Verbundrohres mit mehr als drei Schichten denkbar. Es können sowohl zusätzliche Kunststoffmäntel als auch zusätzliche Armierungen vorgesehen sein. Es kann sich dann eine entsprechend mehrfach treppenförmige bzw. mit mehr Treppenstufen ausgebildete Struktur im Verbindungsbereich ergeben. Das Kopplungsstück und die Kunststoffmäntel des Verbundrohres sollten aus solchen Materialien hergestellt sein, dass sie miteinander stoffschlüssig verbindbar, insbesondere verschmelzbar, bzw. verschweißbar sind. Günstigerweise bestehen der innere Kunststoffmantel und/oder der äußere Kunststoffmantel und/oder auch ein Kunststoffkörper des Kopplungsstücks aus einem Polymer oder sie weisen zumindest ein Polymer auf. Besonders bevorzugt kommen hier thermoplastische Polymere wie z.B. Polyethylen, Polypropylen oder Prolybuthen zum Einsatz. Das Kopplungsstück kann mit oder ohne Armierung ausgeführt sein. Die Armierung liegt, soweit vorhanden, günstigerweise außerhalb des Bereichs des Kunststoffkörpers, welcher die Verbindungsflächen zum äußeren und/oder inneren Kunststoffmantel des Verbundrohres ausbildet. Für die gegebenenfalls vorhandene Armierung des Kopplungsstücks gilt ansonsten das oben zur Armierung des Verbundrohrs Gesagte.

Die Anordnung weist günstigerweise sowohl im Kopplungsstück als auch im Verbindungsbereich als auch im Verbundrohr überall und durchgängig denselben Öffnungsquerschnitt auf. In diesem Sinne ist günstigerweise vorgesehen, dass ein Öffnungsquerschnitt einer, in der axialen Längsrichtung an den Verbindungsbereich anschließenden Öffnung im Kopplungsstück gleich groß oder zumindest so groß ist, wie ein, vorzugsweise vom inneren Kunststoffmantel umschlossener, Öffnungsquerschnitt im Verbindungsbereich und wie ein, vorzugsweise vom inneren Kunststoffmantel umschlossener, Öffnungsquerschnitt des Verbundrohres. Ebenfalls ist es günstig, wenn ein Öffnungsquerschnitt einer, in der axialen Längsrichtung an den Verbindungsbereich anschließenden Öffnung im Kopplungsstück stufenlos in einen, vorzugsweise vom inneren Kunststoffmantel umschlossenen, Öffnungsquerschnitt im Verbindungsbereich und in einen, vorzugsweise vom inneren Kunststoffmantel umschlossenen, Öffnungsquerschnitt des Verbundrohres übergeht.

Bevorzugte Ausgestaltungsformen der Erfindung sehen vor, dass der sich in der axialen Längsrichtung des Verbundrohres weiter in das Kopplungsstück hinein erstreckende äußere oder innere Kunststoffmantel des Verbundrohres in der axialen Längsrichtung auch weiter in das Kopplungsstück hinein erstreckt als die Armierung. Um möglichst große und viele Verbindungsflächen im Verbindungsbereich zu schaffen, ist es besonders günstig, wenn der sich in der axialen Längsrichtung des Verbundrohres weiter in das Kopplungsstück hinein erstreckende.äußere oder innere Kunststoffmantel des Verbundrohres, in einem Längsschnitt entlang der axialen Längsrichtung des Verbundrohres gesehen, an seinem in der axialen Längsrichtung des Verbundrohres gesehenen Ende eine vordere Stirnfläche und zwischen der vorderen Stirnfläche und einem Ende der Armierung eine gegenüber der vorderen Stirnfläche abgewinkelte vordere Mantelfläche aufweist, welche auf der zur Armierung hin gerichteten Seite dieses Kunststoffmantels ausgebildet ist. Stoffschlüssige Verbindungen zwischen dem sich weiter in das Kopplungsstück hinein erstreckenden äußeren und/oder inneren Kunststoffmantel können sowohl an der vorderen Mantelfläche als auch an der vorderen Stirnfläche erfolgen. Insofern ist günstigerweise vorgesehen, dass der sich in der axialen Längsrichtung des Verbundrohres weiter in das Kopplungsstück hinein erstreckende äußere oder innere Kunststoffmantel des Verbundrohres an der vorderen Mantelfläche und/oder an der vorderen Stirnfläche mit dem Kopplungsstück stoffschlüssig verbunden, vorzugsweise verschmolzen, ist. Es kann, z.B. wenn sich die Armierung bis zur vorderen Stirnfläche erstreckt, auch vorgesehen sein, dass der sich weiter in das Kopplungsstück hinein erstreckende Kunststoffmantel an der vorderen Stirnfläche und/oder an einer von der Armierung abgewandten Mantelfläche mit dem Kopplungsstück stoffschlüssig verbunden, vorzugsweise verschmolzen, ist.

Weiter ist es bevorzugt, wenn der sich in der axialen Längsrichtung des Verbundrohres weniger weit in das Kopplungsstück hinein erstreckende äußere oder innere Kunststoffmantel des Verbundrohres im Verbindungsbereich, in einem Längsschnitt entlang der axialen Längsrichtung des Verbundrohres gesehen, an seinem in der axialen Längsrichtung des Verbundrohres gesehenen Ende eine hintere Stirnfläche und bis zur hinteren Stirnfläche eine gegen die hintere Stirnfläche abgewinkelte hintere Mantelfläche aufweist und an der hinteren Mantelfläche und/oder an der hinteren Stirnfläche mit dem Kopplungsstück stoffschlüssig verbunden, vorzugsweise verschmolzen, ist.

Grundsätzlich können sich sowohl der innere als auch der äußere Kunststoffmantel im Verbindungsbereich in der axialen Längsrichtung weiter in das Kopplungsstück hinein erstrecken. Besonders bevorzugte Varianten der Erfindung sehen aber vor, dass sich der innere Kunststoffmantel im Verbindungsbereich in der axialen Längsrichtung weiter in das Kopplungsstück hinein erstreckt als der äußere Kunststoffmantel.

Sowohl die vordere Mantelfläche als auch die hintere Mantelfläche als auch die von der Armierung abgewandte Mantelfläche können zylindermantelförmig oder kegelstumpfförmig ausgebildet sein.

Die stoffschlüssige Verbindung zwischen Kopplungsstück und den Kunststoffmänteln des Verbundrohres erfolgt, wie bereits gesagt, günstigerweise durch ein miteinander Verschmelzen dieser Kunststoffteile. Man kann dies auch als ein miteinander Verschweißen bezeichnen. Das Verfahren des Verschweißens bzw. des miteinander Verschmelzens kann vorsehen, dass zunächst der äußere Kunststoffmantel und der innere Kunststoffmantel an den entsprechend gewünschten Stirn- oder Mantelflächen erwärmt bzw. aufgeschmolzen werden. Zusätzlich oder alternativ kann auch das Kopplungsstück im entsprechenden Verbindungsbereich erwärmt bzw. aufgeschmolzen werden. Anschließend wird das Verbundrohr mit seinem äußeren und seinem inneren Kunststoffmantel entsprechend weit in das Kopplungsstück eingeführt. Das Aushärten der Schmelz- bzw. Schweißverbindung erfolgt dann durch Auskühlen.

Alternativ sind wie gesagt auch andere stoffschlüssige Verbindungsarten möglich. Z.B. ist auch ein Verkleben denkbar.

In den nachfolgend beschriebenen Figuren sind Ausführungsbeispiele der Erfindung gezeigt.
Fig. 1 zeigt eine erste Variante einer erfindungsgemäßen Anordnung;
Fig. 2 zeigt eine demgegenüber leicht abgewandelte zweite Ausgestaltungsform der Erfindung und
Fig. 3 zeigt ein drittes Ausführungsbeispiel der Erfindung.

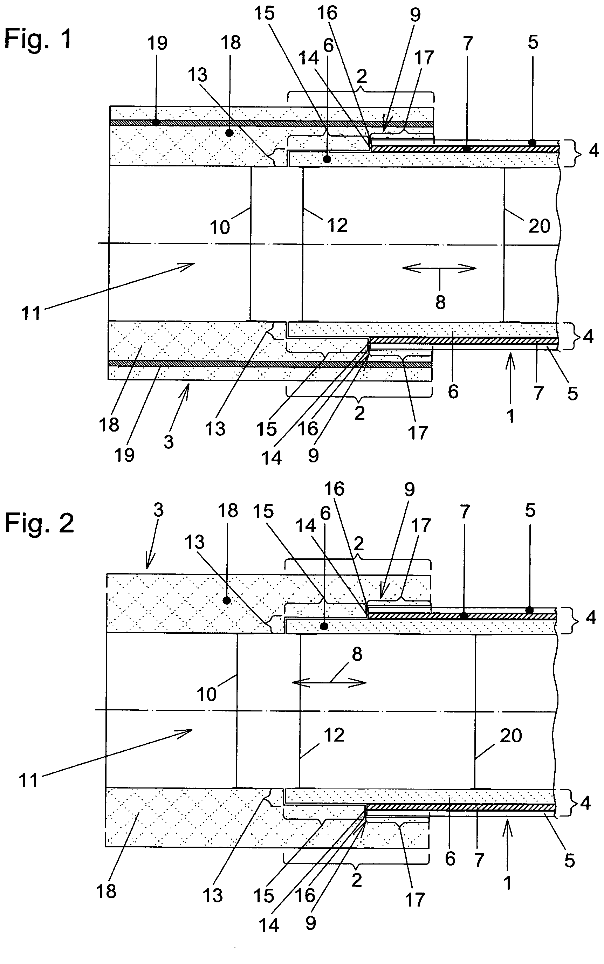

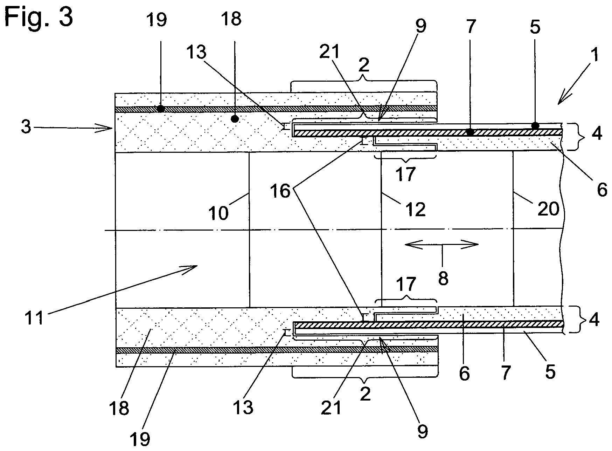

Alle drei Ausführungsbeispiele sind in einem Längsschnitt entlang der axialen Längsrichtung 8 dargestellt. Die Rohrwandung 4 des Verbundrohres 1 ist jeweils dreischichtig aufgebaut. Dem inneren Kunststoffmantel 6 folgt in radialer Richtung nach außen die Armierung 7. Diese ist wiederum von dem äußeren Kunststoffmantel 5 umgeben. Wie eingangs bereits ausgeführt, sind der innere Kunststoffmantel 6, die Armierung 7 und der äußere Kunststoffmantel 5 jeweils günstigerweise in sich umfangsgeschlossen ausgebildet. Auch das Kopplungsstück 3 weist in allen drei Ausgestaltungsformen einen Kunststoffkörper 18 auf. In den Varianten gemäß Fig. 1 und 3 ist in diesem Kunststoffkörper 18 eine Armierung 19 vorhanden. Günstigerweise befindet sich die Armierung 19 außerhalb des Bereichs, in dem die direkten Verbindungen zwischen Kopplungsstück 3 und den beiden Kunststoffmänteln 5 und 6 realisiert sind. In den Ausführungsbeispielen gemäß Fig. 1 und 3 ummantelt die Armierung 19 quasi den Verbindungsbereich 2, was günstig im Sinne der Hochdruckfestigkeit der Anordnung ist.

Das Ausführungsbeispiel gemäß Fig. 2 unterscheidet sich vom Ausführungsbeispiel gemäß Fig. 1 nur dadurch, dass im Ausführungsbeispiel gemäß Fig. 2 keine Armierung 19 im Kopplungsstück 3 vorhanden ist. Ansonsten können die beiden Ausführungsbeispiele gemeinsam beschrieben werden. In beiden hier dargestellten Varianten erstreckt sich der innere Kunststoffmantel 6 in der axialen Längsrichtung 8 des Verbundrohres 1 weiter in das Kopplungsstück 3 hinein als der äußere Kunststoffmantel 5 und auch als die Armierung 7. Hierdurch steht sowohl die vordere Stirnfläche 13 als auch die demgegenüber abgewinkelt ausgebildete vordere Mantelfläche 15, welche sich zwischen dem Ende der Armierung 14 und der vorderen Stirnfläche 13 erstreckt, für eine stoffschlüssige Verbindung mit dem Kunststoffkörper 18 des Kopplungsstückes 3 zur Verfügung. Die stoffschlüssige Verbindung kann an der vorderen Mantelfläche 15 und/oder an der vorderen Stirnfläche 13 erfolgen. Der äußere Kunststoffmantel 5 kann an seiner hinteren Stirnfläche 16 und/oder an der hinteren Mantelfläche 17 mit dem Kunststoffkörper 18 des Kopplungsstücks 3 stoffschlüssig verbunden werden. Insgesamt bilden der äußere Kunststoffmantel 5 und der innere Kunststoffmantel 6 im Verbindungsbereich 2 in einem Längsschnitt entlang der axialen Längsrichtung des Verbundrohres 1 gesehen gemeinsam eine treppenförmige Struktur 9 der Rohrwandung 4. Dies ist sowohl in Fig. 1 als auch in Fig. 2 gut zu sehen. Die vordere Stirnfläche 13 und die vordere Mantelfläche 15 stehen im gezeigten Längsschnitt günstigerweise orthogonal aufeinander. Das gleiche gilt für die vordere Mantelfläche 15 und die hintere Stirnfläche 16, sowie für die hintere Stirnfläche 16 und die hintere Mantelfläche 17. Es sind aber auch andere Winkel möglich.

Mit der Erfindung ist eine hochdruckfeste Verbindung zwischen dem Kopplungsstück 3 und dem Verbundrohr 1 möglich, ohne dass hierfür der Öffnungsquerschnitt innerhalb der Anordnung an irgendeiner Stelle verengt ausgestaltet werden müsste. In den hier gezeigten Ausführungsbeispielen geht der Öffnungsquerschnitt 10 der, in der axialen Längsrichtung 8 an den Verbindungsbereich 2 anschließenden, Öffnung 11 des Kopplungsstücks 3 stufenlos in den im Verbindungsbereich 2 in den ersten beiden Ausführungsformen vom inneren Kunststoffmantel 6 umschlossenen Öffnungsquerschnitt 12 und dann stufenlos in den Öffnungsquerschnitt 20 des Verbundrohres 1 über.

Bei dem Kopplungsstück 3 kann es sich um unterschiedlichste Bauteile wie z.B. ebenfalls ein Verbundrohr, einen Fitting, eine Muffe, einen Sondenfuß einer Geothermiesonde aber auch um ganz andere Bauteile handeln. Von den ersten beiden hier gezeigten Ausführungsbeispielen sind zahlreiche Abwandlungsformen möglich, ohne die Erfindung zu verlassen. Insbesondere kann auch der äußere Kunststoffmantel 5 sich in axialer Längsrichtung 8 weiter in das Kopplungsstück 3 hinein erstrecken als der innere Kunststoffmantel 6, wie dies beispielhaft am Ausführungsbeispiel der Erfindung gemäß Fig. 3 gezeigt ist.

Zu Fig. 3 werden nachfolgend die Unterschiede zu den ersten beiden Ausführungsbeispielen geschildert. Ansonsten gilt, soweit anwendbar, auch für die Variante gemäß Fig. 3 das oben zu den ersten beiden Ausführungsbeispielen und in der Einleitung Gesagte.

In Fig. 3 erstreckt sich der äußere Kunststoffmantel 5 zusammen mit der Armierung 7 in der axialen Längsrichtung 8 weiter in das Kopplungsstück 3 hinein als der innere Kunststoffmantel 6. Insgesamt ergibt sich im Verbindungsbereich 2 wiederum die erfindungsgemäße treppenförmige Struktur. Die Öffnungsquerschnitte 10, 12 und 20 vor, hinter und im Verbindungsbereich 2 gehen stufenlos und gleichbleibend ineinander über. Zur stoffschlüssigen Verbindung zwischen Kopplungsstück 3 und innerem Kunststoffmantel 6 stehen die hintere Stirnfläche 16 und/oder die hintere Mantelfläche 17 zur Verfügung. Der äußere Kunststoffmantel 5 kann über die vordere Stirnfläche 13 und/oder die von der Armierung 7 abgewandte Mantelfläche 21 stoffschlüssig mit dem Kopplungsstück 3 verbunden werden.

Abweichend von Fig. 3 wäre es erfindungsgemäß auch möglich, bei dieser Variante die Armierung 7 in axialer Längsrichtung 8 z.B. nur bis zur hinteren Stirnfläche 16 zu führen. Hierdurch würde am äußeren Kunststoffmantel 5 auf der zur Armierung 7 hin gerichteten Seite des äußeren Kunststoffmantels 5 eine vordere Mantelfläche 15 frei werden, an der der äußere Kunststoffmantel 5 zusätzlich oder alternativ mit dem Kopplungsstück 3 stoffschlüssig verbunden werden kann.

### Legende

### zu den Hinweisziffern:

- 1: Verbundrohr
- 2: Verbindungsbereich
- 3: Kopplungsstück
- 4: Rohrwandung
- 5: äußerer Kunststoffmantel
- 6: innerer Kunststoffmantel
- 7: Armierung
- 8: axiale Längsrichtung
- 9: treppenförmige Struktur
- 10: Öffnungsquerschnitt
- 11: Öffnung
- 12: Öffnungsquerschnitt
- 13: vordere Stirnfläche
- 14: Ende der Armierung
- 15: vordere Mantelfläche
- 16: hintere Stirnfläche
- 17: hintere Mantelfläche
- 18: Kunststoffkörper
- 19: Armierung
- 20: Öffnungsquerschnitt
- 21: abgewandte Mantelfläche

## Patentansprüche

1. Anordnung mit zumindest einem Verbundrohr (1) und zumindest einem mit dem Verbundrohr (1) in einem Verbindungsbereich (2) verbundenen Kopplungsstück (3), wobei das Verbundrohr (1) eine mehrschichtig aufgebaute Rohrwandung (4) mit zumindest einem äußeren Kunststoffmantel (5) und zumindest einem inneren Kunststoffmantel (6) und zumindest einer zwischen dem äußeren Kunststoffmantel (5) und dem inneren Kunststoffmantel (6) angeordneten Armierung (7) aufweist und der äußere Kunststoffmantel (5) und der innere Kunststoffmantel (6) im Verbindungsbereich (2) jeweils stoffschlüssig mit dem Kopplungsstück (3) verbunden, insbesondere verschmolzen, sind, wobei sich der äußere Kunststoffmantel (5) und der innere Kunststoffmantel (6) in einer axialen Längsrichtung (8) des Verbundrohres (1) verschieden weit in das Kopplungsstück (3) hinein erstrecken, **dadurch gekennzeichnet, dass** der äußere Kunststoffmantel (5) und der innere Kunststoffmantel (6) im Verbindungsbereich (2), in einem Längsschnitt entlang der axialen Längsrichtung (8) des Verbundrohres (1) gesehen, gemeinsam eine treppenförmige Struktur (9) der Rohrwandung (4) ausbilden.

2. Anordnung nach Anspruch 1, **dadurch gekennzeichnet, dass** ein Öffnungsquerschnitt (10) einer, in der axialen Längsrichtung (8) an den Verbindungsbereich (2) anschließenden Öffnung (11) im Kopplungsstück (3) gleich groß oder zumindest so groß ist, wie ein, vorzugsweise vom inneren Kunststoffmantel (6) umschlossener, Öffnungsquerschnitt (12) im Verbindungsbereich (2) und wie ein, vorzugsweise vom inneren Kunststoffmantel (6) umschlossener, Öffnungsquerschnitt (20) des Verbundrohres (1).

3. Anordnung nach Anspruch 1 oder 2, **dadurch gekennzeichnet, dass** ein Öffnungsquerschnitt (10) einer, in der axialen Längsrichtung (8) an den Verbindungsbereich (2) anschließenden Öffnung (11) im Kopplungsstück (3) stufenlos in einen, vorzugsweise vom inneren Kunststoffmantel (6) umschlossenen, Öffnungsquerschnitt (12) im Verbindungsbereich (2) und in einen, vorzugsweise vom inneren Kunststoffmantel (6) umschlossenen, Öffnungsquerschnitt (20) des Verbundrohres (1) übergeht.

4. Anordnung nach einem der Ansprüche 1 bis 3, **dadurch gekennzeichnet, dass** der sich in der axialen Längsrichtung (8) des Verbundrohres (1) weiter in das Kopplungsstück (3) hinein erstreckende äußere oder innere Kunststoffmantel (5, 6) des Verbundrohres (1) in der axialen Längsrichtung (8) sich weiter in das Kopplungsstück (3) hinein erstreckt als die Armierung (7).

5. Anordnung nach Anspruch 4, **dadurch gekennzeichnet, dass** der sich in der axialen Längsrichtung (8) des Verbundrohres (1) weiter in das Kopplungsstück (3) hinein erstreckende äußere oder innere Kunststoffmantel (5, 6) des Verbundrohres (1), in einem Längsschnitt entlang der axialen Längsrichtung (8) des Verbundrohres (1) gesehen, an seinem in der axialen Längsrichtung (8) des Verbundrohres (1) gesehenen Ende eine vordere Stirnfläche (13) und zwischen der vorderen Stirnfläche (13) und einem Ende (14) der Armierung (7) eine gegenüber der vorderen Stirnfläche (13) abgewinkelte vordere Mantelfläche (15) aufweist, welche auf der zur Armierung (7) hin gerichteten Seite dieses Kunststoffmantels (5, 6) ausgebildet ist.

6. Anordnung nach Anspruch 5, **dadurch gekennzeichnet, dass** der sich in der axialen Längsrichtung (8) des Verbundrohres (1) weiter in das Kopplungsstück (3) hinein erstreckende äußere oder innere Kunststoffmantel (5, 6) des Verbundrohres (1) an der vorderen Mantelfläche (15) und/oder an der vorderen Stirnfläche (13) mit dem Kopplungsstück (3) stoffschlüssig verbunden, vorzugsweise verschmolzen, ist.

7. Anordnung nach einem der Ansprüche 1 bis 6, **dadurch gekennzeichnet, dass** der sich in der axialen Längsrichtung (8) des Verbundrohres (1) weniger weit in das Kopplungsstück (3) hinein erstreckende äußere oder innere Kunststoffmantel (5, 6) des Verbundrohres (1) im Verbindungsbereich (2), in einem Längsschnitt entlang der axialen Längsrichtung (8) des Verbundrohres (1) gesehen, an seinem in der axialen Längsrichtung (8) des Verbundrohres (1) gesehenen Ende eine hintere Stirnfläche (16) und bis zur hinteren Stirnfläche (16) eine gegen die hintere Stirnfläche (16) abgewinkelte hintere Mantelfläche (17) aufweist und an der hinteren Mantelfläche (17) und/oder an der hinteren Stirnfläche (16) mit dem Kopplungsstück (3) stoffschlüssig verbunden, vorzugsweise verschmolzen, ist.

8. Anordnung nach einem der Ansprüche 5 bis 7, **dadurch gekennzeichnet, dass** die vordere Mantelfläche (15) und/oder die hintere Mantelfläche (17) zylindermantelförmig oder kegelstumpfförmig ausgebildet ist bzw. sind.

9. Anordnung nach einem der Ansprüche 1 bis 8, **dadurch gekennzeichnet, dass** sich der innere Kunststoffmantel (6) im Verbindungsbereich (2) in der axialen Längsrichtung (8) weiter in das Kopplungsstück (3) hinein erstreckt als der äußere Kunststoffmantel (5).

10. Anordnung nach einem der Ansprüche 1 bis 9, **dadurch gekennzeichnet, dass** der innere Kunststoffmantel (6) und/oder der äußere Kunststoffmantel (5) zumindest ein, vorzugsweise thermoplastisches, Polymer aufweist bzw. aufweisen oder daraus besteht bzw. bestehen.

## Claims

1. Assembly with at least one composite pipe (1) and at least one coupling piece (3) connected with the composite pipe (1) in a connecting region (2), wherein the composite pipe (1) comprises a multi-layered pipe wall (4) with at least one outer plastic sheath (5) and at least one inner plastic sheath (6) and at least one reinforcement (7) arranged between the outer plastic sheath (5) and the inner plastic sheath (6), and the outer plastic sheath (5) and the inner plastic sheath (6) are in each case materially bonded, in particular fused together with the coupling piece (3) in the connecting region (2), wherein the outer plastic sheath (5) and the inner plastic sheath (6) extend into the coupling piece (3) to different depths in an axial longitudinal direction (8) of the composite pipe (1), **characterised in that**, viewed in a longitudinal section along the axial longitudinal direction (8) of the composite pipe (1), the outer plastic sheath (5) and the inner plastic sheath (6) together form a step-formed structure (9) of the pipe wall (4) in the connecting region (2).

2. Assembly according to claim 1, **characterised in that** an opening cross section (10) of an opening (11) in the coupling piece (3) adjacent to the connecting region (2) in the axial longitudinal direction (8) is the same size or at least as large as an opening cross section (12), preferably surrounded by the inner plastic sheath (6), in the connecting region (2), and as an opening cross section (20), preferably surrounded by the inner plastic sheath (6), of the composite pipe (1).

3. Assembly according to claim 1 or 2, **characterised in that** an opening cross section (10) of an opening (11) in the coupling piece (3) adjacent to the connecting region (2) in the axial longitudinal direction (8) transitions steplessly into an opening cross section (12), preferably surrounded by the inner plastic sheath (6), in the connecting region (2) and into an opening cross section (20), preferably surrounded by the inner plastic sheath (6), of the composite pipe (1).

4. Assembly according to one of the claims 1 to 3, **characterised in that** the outer or inner plastic sheath (5, 6) of the composite pipe (1) extending further into the coupling piece (3) in the axial longitudinal direction (8) of the composite pipe (1) extends further into the coupling piece (3) in the axial longitudinal direction (8) than the reinforcement (7).

5. Assembly according to claim 4, **characterised in that** the outer or inner plastic sheath (5, 6) of the composite pipe (1) extending further into the coupling piece (3) in the axial longitudinal direction (8) of the composite pipe (1), viewed in a longitudinal section along the axial longitudinal direction (8) of the composite pipe (1), has a front end face (13) on its end, viewed in the axial longitudinal direction (8) of the composite pipe (1) and, between the front end face (13) and an end (14) of the reinforcement (7), a front lateral surface (15) oriented at an angle relative to the front end face (13) which is formed on the side of this plastic sheath (5, 6) facing the reinforcement (7).

6. Assembly according to claim 5, **characterised in that** the outer or inner plastic sheath (5, 6) of the composite pipe (1) extending further into the coupling piece (3) in the axial longitudinal direction (8) of the composite pipe (1) is materially bonded, in particular fused together with the coupling piece (3) on the front lateral surface (15) and/or on the front end face (13).

7. Assembly according to one of the claims 1 to 6, **characterised in that** the outer or inner plastic sheath (5, 6) of the composite pipe (1) extending less far into the coupling piece (3) in the axial longitudinal direction (8) of the composite pipe (1) in the connecting region (2), viewed in a longitudinal section along the axial longitudinal direction (8) of the composite pipe (1), has a rear end face (16) on its end, viewed in the axial longitudinal direction (8) of the composite pipe (1), and extending up to the rear end face (16) has a rear lateral surface (17) oriented at an angle relative to the rear end face (16) and is materially bonded, in particular fused together with the coupling piece (3) on the rear lateral surface (17) and/or on the rear end face (16).

8. Assembly according to one of the claims 5 to 7, **characterised in that** the front lateral surface (15) and/or the rear lateral surface (17) have the form of a cylinder barrel or truncated cone.

9. Assembly according to one of the claims 1 to 8, **characterised in that** the inner plastic sheath (6) in the connecting region (2) extends further into coupling piece (3) in the axial longitudinal direction (8) than the outer plastic sheath (5).

10. Assembly according to one of the claims 1 to 9, **characterised in that** the inner plastic sheath (6) and/or the outer plastic sheath (5) comprise(s) or consist(s) of at least one preferably thermoplastic polymer.

## Revendications

1. Système doté d'au moins un tube composite (1) et d'au moins une pièce d'accouplement (3) reliée au tube composite (1) dans une zone de raccordement (2), le tube composite (1) présentant une paroi de tube (4) conçue en plusieurs couches avec au moins une gaine extérieure en matière plastique (5) et au moins une gaine intérieure en matière plastique (6) et au moins une armature (7) disposée entre la gaine extérieure en matière plastique (5) et la gaine intérieure en matière plastique (6), et la gaine extérieure en matière plastique (5) et la gaine intérieure en matière plastique (6) étant reliées chacune par continuité de matière, en particulier par fusion, à la pièce d'accouplement (3) dans la zone de raccordement (2), la gaine extérieure en matière plastique (5) et la gaine intérieure en matière plastique (6) s'étendant dans une direction longitudinale axiale (8) du tube composite (1) d'une profondeur différente dans la pièce d'accouplement (3), **caractérisé en ce que**, considérées dans une section longitudinale le long de la direction longitudinale axiale (8) du tube composite (1), la gaine extérieure en matière plastique (5) et la gaine intérieure en matière plastique (6) forment ensemble dans la zone de raccordement (2) une structure en forme d'escalier (9) de la paroi du tube (4).

2. Système selon la revendication 1, **caractérisé en ce qu'**une section d'ouverture (10) d'une ouverture (11) dans la pièce d'accouplement (3) qui jouxte, dans la direction longitudinale axiale (8), la zone de raccordement (2) est de même taille ou au moins aussi grande qu'une section d'ouverture (12) dans la zone de raccordement (2), de préférence entourée par la gaine intérieure en matière plastique (6), et qu'une section d'ouverture (20) du tube composite (1), de préférence entourée par la gaine intérieure en matière plastique (6).

3. Système selon la revendication 1 ou 2, **caractérisé en ce qu'**une section d'ouverture (10) d'une ouverture (11) dans la pièce d'accouplement (3) qui jouxte, dans la direction longitudinale axiale (8), la zone de raccordement (2), se fond de façon continue dans une section d'ouverture (12) dans la zone de raccordement (2), de préférence entourée par la gaine intérieure en matière plastique (6), et dans une section d'ouverture (20) du tube composite (1), de préférence entourée par la gaine intérieure en matière plastique (6).

4. Système selon l'une des revendications 1 à 3, **caractérisé en ce que** la gaine extérieure ou intérieure en matière plastique (5, 6) du tube composite (1) qui s'étend, dans la direction longitudinale axiale (8), plus loin dans la pièce d'accouplement (3), s'étend plus loin dans la pièce d'accouplement (3) que l'armature (7).

5. Système selon la revendication 4, **caractérisé en ce que**, considérée dans une section longitudinale le long de la direction longitudinale axiale (8) du tube composite (1), la gaine extérieure ou intérieure en matière plastique (5, 6) du tube composite (1) qui s'étend, dans la direction longitudinale axiale (8) du tube composite (1), plus loin dans la pièce d'accouplement (3) présente à son extrémité, vue dans la direction longitudinale axiale (8) du tube composite (1), une face frontale antérieure (13) et, entre la face frontale antérieure (13) et une extrémité (14) de l'armature (7), une surface d'enveloppe antérieure (15) inclinée par rapport à la face frontale antérieure (13) et qui est formée sur le côté de cette gaine en matière plastique (5, 6) qui est orienté vers l'armature (7).

6. Système selon la revendication 5, **caractérisé en ce que** la gaine extérieure ou intérieure en matière plastique (5, 6) du tube composite (1) qui s'étend, dans la direction longitudinale axiale (8) du tube composite (1), plus loin dans la pièce d'accouplement (3) est reliée par continuité de matière, de préférence par fusion, à la pièce d'accouplement (3) au niveau de la surface d'enveloppe antérieure (15) et/ou au niveau de la face frontale (13).

7. Système selon l'une des revendications 1 à 6, **caractérisé en ce que**, considérée dans une section longitudinale le long de la direction longitudinale axiale (8) du tube composite (1), la gaine extérieure ou intérieure en matière plastique (5, 6) du tube composite (1) qui s'étend, dans la direction longitudinale axiale (8) du tube composite (1), moins loin dans la pièce d'accouplement (3) présente dans la zone de raccordement (2) à son extrémité, vue dans la direction longitudinale axiale (8) du tube composite (1), une face frontale postérieure (16) et, jusqu'à la face frontale postérieure (16), une surface d'enveloppe postérieure (17) inclinée par rapport à la face frontale postérieure (16), et est reliée par continuité de matière, de préférence par fusion, à la pièce d'accouplement (3) au niveau de la surface d'enveloppe postérieure (17) et/ou au niveau de la face frontale postérieure (16).

8. Système selon l'une des revendications 5 à 7, **caractérisé en ce que** la surface d'enveloppe antérieure (15) et/ou la surface d'enveloppe postérieure (17) est/sont de forme cylindrique ou tronconique.

9. Système selon l'une des revendications 1 à 8, **caractérisé en ce que** dans la zone de raccordement (2), la gaine intérieure en matière plastique (6) s'étend, dans la direction longitudinale axiale (8), plus loin dans la pièce d'accouplement (3) que la gaine extérieure en matière plastique (5).

10. Système selon l'une des revendications 1 à 9, **caractérisé en ce que** la gaine intérieure en matière plastique (6) et/ou la gaine extérieure en matière plastique (5) présente(nt) au moins un polymère, de préférence thermoplastique, ou en est/sont constitué(s).
